# FASCICULE DE BREVET EUROPEEN

(11) **EP 0 943 062 B1**
(45) Date de publication et mention de la délivrance du brevet: **27.02.2002**
(21) Numéro de dépôt: 97951303.3
(22) Date de dépôt: 10.12.1997
(51) Int. Cl.: F16F 1/12, F16F 3/12, B60G 11/52, B60G 17/02, B60G 15/06

(54) **SUSPENSIONS DE ROUE DE VEHICULE UTILISANT UN RESSORT COMBINE A UNE ARMATURE SOUPLE DESTINEE A MODIFIER SA COURBE DE RAIDEUR**
FAHRZEUGRADAUFHÄNGUNG MIT EINER FEDER, DIE ZUR VERÄNDERUNG DER STEIFIGKEITSKURVE MIT EINER FLEXIBLEN VERSTÄRKUNG KOMBINIERT IST
VEHICLE WHEEL SUSPENSIONS USING SPRING COMBINED WITH FLEXIBLE ARMOURING FOR MODIFYING THE STIFFNESS CURVE

(30) Priorité: 12.12.1996 FR 9615476
(43) Date de publication de la demande: 22.09.1999
(73) Titulaire: MAURO BIANCHI S.A., F-92800 Puteaux (FR)
(72) Inventeur: BIANCHI, Mauro, F-83680 La Garde Freinet (FR)
(74) Mandataire: Hautier, Jean-Louis
(86) Numéro de dépôt international: FR9702264
(87) Numéro de publication internationale: WO9826193

(56) Documents cités:
- EP-A- 0 518 759
- EP-A- 0 520 928
- DE-A- 3 517 900
- FR-A- 598 034
- FR-A- 2 038 672
- GB-A- 497 051
- GB-A- 895 798
- GB-A- 2 153 483
- US-A- 1 783 801
- US-A- 2 437 631
- US-A- 3 014 713
- US-A- 3 417 986
- US-A- 3 674 250
- PATENT ABSTRACTS OF JAPAN vol. 011, no. 388 (M-652), 18 décembre 1987 & JP 62 155345 A (DAIHATSU MOTOR CO LTD), 10 juillet 1987,
- PATENT ABSTRACTS OF JAPAN vol. 013, no. 010 (M-782), 11 janvier 1989 & JP 63 219933 A (SEIKO EPSON CORP), 13 septembre 1988,

## Description

La présente invention concerne un nouveau type de suspensions à flexibilité ou raideur variable en dynamique et dont la flexibilité est augmentée dans la zone d'enfoncement des roues jusqu'à la position butée de choc, et dont la raideur est augmentée de la zone normale en ordre de marche jusqu'à la position roue pendante.

Jusqu'à présent, la plupart des suspensions sont à flexibilité linéaire et utilisent des raideurs qui sont le résultat d'un compromis entre le confort vertical et la tenue de caisse du véhicule. Ainsi le confort vertical et l'isolation des impacts imposent de grandes flexibilités qui permettent une retransmission moindre des efforts générés dans la caisse, ainsi que des fréquences d'oscillations faibles favorables au confort des occupants, alors que la tenue de caisse des véhicules impose, par contre, des raideurs importantes susceptibles de contrer avec une faible amplitude les transferts de masses.

Afin d'optimiser ce compromis sont apparues les barres anti-devers qui, lors des transferts latéraux de masses raidissent les suspensions en virage afin de diminuer les amplitudes de débattements. L'inconvénient de ces éléments est qu'ils lient les roues d'un même train, les rendant moins indépendantes, et que cette liaison associée aux frottements supplémentaires dégrade la filtration du véhicule, aussi bien en confort vertical qu'en remontées dans l'ensemble de direction.

Par ailleurs, les transferts de masses consécutifs aux accélérations longitudinales sont toujours contrôlés par les seules raideurs verticales des suspensions.

Les suspensions à flexibilité variable tentent de pallier à ces inconvénients en proposant des raideurs progressivement plus importantes vers la course de compression. L'inconvénient de ces systèmes réside dans le fait que la roue en appui, qui prend en charge la plus grande partie de l'adhérence latérale, est pénalisée par une forte raideur néfaste à l'absorption. Au contraire, la roue intérieure est exagérément délestée car pénalisée par une faible raideur.

Une autre conséquence de cette configuration est que la course de compression étant diminuée, et la course de détente augmentée, le centre de gravité du véhicule s'élève en appui, ce qui est préjudiciable au comportement du véhicule.

Il existe également des suspensions pilotées.

Le principal inconvénient des suspensions pilotées en amortissement, en assiette, et/ou en raideur réside, bien sûr, dans la complexité de ces systèmes qui en grève le prix et rend leur fiabilité et leur maintenance plus critiques.

Il existe enfin d'autres suspensions dite CONTRACTIVE (marque déposée) qui font l'objet de nombreux brevets de la part du demandeur.

*Une telle suspension est bien décrite dans le document EP-B* *0.446.338 du demandeur qui a pour objet une suspension de roue de véhicule utilisant plusieurs éléments élastiques montés en opposition ou non l'un par rapport à l'autre ou un seul élément élastique avec au moins une butée limitant le fonctionnement sur une seule portion dudit élément, ladite suspension utilisant deux raideurs distinctes lors du débattement complet de la roue du véhicule de part et d'autre de la position en ordre de marche de la suspension, le point d'inflexion entre les deux raideurs étant localisé au voisinage de la position en ordre de marche de la suspension, ladite utilisation des raideurs différentes s'effectuant en dynamique, caractérisé en ce que dans le cas d'un élément élastique unique, on utilise une butée/coupelle à un endroit précis dudit ressort, de manière à obtenir une courbe de raideur à double pente, la ou les butées sont mises en contact pour une assiette correspondant au véhicule en ordre de marche, ceci de manière à ce que, partant de cette position, on décolle les butées et on sollicite la totalité du ressort hélicoïdal lors de l'enfoncement total de la suspension, tandis qu'en course de détente, la présence d'une butée limite le fonctionnement sur la portion réduite dudit ressort hélicoïdal*.

Ce type de suspension fonctionne sur trois principes différents.

Premièrement, il y a deux raideurs distinctes autour de la position statique du véhicule.

Deuxièmement, le point de rupture entre ces deux raideurs se situe précisément à la position statique du véhicule et est appelé point de référence auto-stabilisant.

Troisièmement, ce point de référence, qui fait basculer la suspension d'une raideur à l'autre, est physiquement constitué d'une butée, dotée d'une courbe de raideur asymptotique, qui permet de mettre en action l'élément contractif.

Il est impératif que cette butée comporte un élément élastique qui permette de lisser le passage d'une raideur à l'autre. Sur une courbe de raideur, cela se traduit par un arc de raccordement entre les deux droites de flexibilité de compression et de détente.

La suspension CONTRACTIVE est donc une suspension asymétrique dont la raideur en détente est supérieure à la raideur en compression, le changement de raideur intervenant autour de la position statique du véhicule par l'intermédiaire d'une butée de raccordement.

Néanmoins, cette technique nécessite, pour être adaptée à un véhicule classique, le remplacement de l'ensemble des suspensions.

La présente invention porte sur les suspensions comportant un ou plusieurs ressorts hélicoïdaux ; lesquels ressorts étant utilisés dans la totalité de leur flexibilité lors de la course de choc tandis qu'une partie seulement de ces ressorts se décomprime lors de la course de détente.

Ces deux courses de choc et de détente ont pour origine la position "ordre de marche" de la suspension du véhicule.

Selon l'invention, la fonction CONTRACTIVE est assurée intégralement par le ressort qui vient s'implanter en lieu et place du ressort classique sans nécessiter de modifications du mécanisme de suspension de base.

Le coût de l'adaptation s'en trouve considérablement diminué et il est permis de penser que la suppression des barres anti-devers et l'économie qui s'en trouve engendrée doit largement compenser le surcoût de l'aménagement de tels ressorts.

A cet effet, la présente invention concerne une suspension de roue de véhicule utilisant au moins un ressort hélicoïdal, et au moins une armature souple de retenue et de raccordement, qui en position d'ordre de marche, contraint une portion du ressort en le maintenant comprimé, pour obtenir deux courbes de raideurs différentes dont le point d'inflexion est localisé au voisinage de la position en ordre de marche ; par rapport à cette position, lors d'une compression, l'ensemble du ressort hélicoïdal est comprimé alors que, lors d'une détente, seule la portion non contrainte dudit ressort est décomprimée, la suspension étant donc asymétrique avec une raideur en détente qui est supérieure à la raideur en compression, caractérisé par le fait que chaque armature est constituée, d'une part, de deux éléments de fixation et de retenue, l'un coopérant avec tout ou partie d'une spire du ressort hélicoïdal, l'autre coopérant soit avec toute ou partie d'une autre spire dudit ressort, soit avec le corps de l'amortisseur, et d'autre part, d'un élément longitudinal, déformable en compression et indéformable en détente, solidaire des deux éléments de fixation et de retenue, l'armature circonscrivant et contraignant au moins deux spires du ressort hélicoïdal.

Dans le cas où la suspension utilise un seul ressort hélicoïdal et au moins une armature souple de retenue et de raccordement, où les deux éléments de fixation de chaque armature coopèrent avec tout ou partie de deux spires du ressort hélicoïdal, chaque armature est constituée d'une bande caoutchouteuse qui circonscrit tout ou partie d'au moins deux spires dudit ressort, les éléments de fixation étant constitués par des boucles de la bande caoutchouteuse et les deux extrémités libres étant solidarisées l'une à l'autre.

Dans le cas où la suspension utilise un seul ressort hélicoïdal et au moins une armature souple de retenue et de raccordement où les deux éléments de fixation et de retenue de chaque armature coopèrent respectivement avec tout ou partie d'une des spires du ressort hélicoïdal et avec le corps de l'amortisseur, chaque armature est constituée d'une bande caoutchouteuse qui circonscrit tout ou partie d'au moins deux spires dudit ressort, les éléments de fixation et de retenue constitués par une boucle de la bande caoutchouteuse au niveau de la spire et par les deux extrémités libres de ladite bande solidarisées au corps de l'amortisseur.

Dans le cas où l'armature souple de retenue et de raccordement comporte deux demi-bande caoutchouteuses situées l'une à l'intérieur, l'autre à l'extérieur de la forme tubulaire ou tronconique constituée par les spires du ressort hélicoïdal, les demi- bandes extérieure et intérieure sont solidarisées l'une à l'autre entre tout ou partie de deux spires circonscrites et adjacentes.

Selon un premier mode de réalisation du cas précédent, la solidarisation des demi-bandes s'effectue dans le plan de la forme tubulaire ou tronconique constitué par les spires du ressort hélicoïdal.

Selon un second mode de réalisation du cas précédent, la solidarisation des demi-bandes s'effectue à l'extérieur du plan de la forme tubulaire ou tronconique constituée par les spires du ressort hélicoïdal.

Dans le cas où la suspension utilise deux ressorts hélicoïdaux montés en série et au moins une armature souple de retenue et de raccordement, où les deux éléments de fixation de chaque armature coopèrent respectivement avec tout ou partie d'une des spires d'un des ressorts hélicoïdaux et avec le corps de l'amortisseur, chaque armature est constituée d'une bande caoutchouteuse qui comporte à ces deux extrémités libres, d'une part, un des éléments de fixation ou de retenue fixé entre les deux ressorts hélicoïdaux et, d'autre part, l'autre élément de fixation solidarisé au corps de l'amortisseur.

Selon un premier mode de réalisation du cas précédent, l'élément de fixation, fixé entre les deux ressorts hélicoïdaux, est solidaire d'une coupelle d'appui qui sert d'interface entre les deux ressorts.

Selon un second mode de réalisation du cas précédent, où la suspension est constituée d'au moins deux armatures de retenue et de raccordement, les éléments de fixation ou de retenue, fixés entre les deux ressorts hélicoïdaux, sont solidarisés par l'intermédiaire d'une coupelle flottante qui sépare les deux ressorts.

Quel que soit le cas ou le mode de réalisation, les armatures de retenue et de raccordement sont caoutchouteuses et renferment des câbles qui rendent les armatures déformables en compression et indéformables en détente.

Quel que soit le cas ou le mode de réalisation, chaque armature de retenue et de raccordement est équipée d'un vérin permettant de régler la contrainte.

Selon un autre mode de réalisation, la présente invention concerne également une suspension de roue de véhicule utilisant au moins un ressort caoutchouteux, et au moins une armature de retenue et de raccordement, qui en position d'ordre de marche, contraint une portion du ressort en le maintenant comprimé pour obtenir deux courbes de raideurs différentes dont le point d'inflexion est localisé au voisinage de la position en ordre de marche ; par rapport à cette position, lors d'une compression, l'ensemble du ressort caoutchouteux est comprimé alors que, lors d'une détente, seule la portion non contrainte dudit ressort est décomprimée, la suspension étant donc asymétrique avec une raideur en détente qui est supérieure à la raideur en compression, caractérisée par le fait que chaque armature de retenue et de raccordement est constituée, d'une part, de deux éléments de fixation, l'un coopérant avec une partie du ressort caoutchouteux, l'autre coopérant avec une autre partie dudit ressort, et d'autre part, d'au moins un élément longitudinal déformable en compression et indéformable en détente, solidaire des deux éléments de fixation, l'armature de retenue et de raccordement circonscrivant et contraignant au moins sur tout ou partie de la longueur le ressort caoutchouteux.

Dans ce cas, les éléments de fixation sont constitués par une coupelle d'appui supérieure et une coupelle d'appui inférieure, reliées l'une à l'autre par des éléments longitudinaux ou câbles.

Les dessins ci-joints sont donnés à titre d'exemples indicatifs et non limitatifs. Ils représentent plusieurs modes de réalisation préférés selon l'invention. Ils permettront de comprendre aisément l'invention.

La figure 1 représente une vue en coupe longitudinale d'un ressort selon l'invention qui comporte une armature souple de retenue et de raccordement circonscrivant l'ensemble du ressort, dans une position de repos, avant que le ressort ne soit mis en place au niveau d'un véhicule.

La figure 2 est une vue identique à la figure 1 dans laquelle le ressort a été monté sur un véhicule et est en position statique, il subit une compression correspondant à la charge en ordre de marche du véhicule.

La figure 3 est une vue identique aux figures 1 et 2 dans laquelle la compression est plus importante.

La figure 4 représente une vue identique à la figure 3 d'un deuxième mode de réalisation de la présente invention.

La figure 5 représente une vue en coupe longitudinale d'un ressort selon un troisième mode de réalisation.

La figure 6 représente en vue en coupe longitudinale d'un ressort selon un quatrième mode de réalisation de la présente invention.

La figure 7 représente une vue en coupe longitudinale d'un ressort selon un cinquième mode de réalisation de la présente invention.

Les figures 8 et 9 représentent deux autres modes de réalisation différents des coussinets permettant la réalisation du mode de réalisation de la figure 7.

La figure 10 représente une vue en coupe longitudinale partielle d'une suspension selon un sixième mode de réalisation de la présente invention.

La figure 11 représente une vue en coupe longitudinale d'une suspension comportant un dispositif selon un septième mode de réalisation de la présente invention.

La figure 12 représente une vue en coupe longitudinale d'une suspension selon un huitième mode de réalisation de la présente invention.

La figure 13 représente une vue en coupe longitudinale d'une suspension selon un neuvième mode de réalisation de la présente invention.

La figure 14 représente une vue détaillée de l'état de la butée de raccordement après compression selon la figure 11.

Les figures 15, 16 et 17 représentent un autre mode de réalisation qui permet de mieux comprendre le fonctionnement général de la présente invention.

La présente invention concerne donc une multitude de suspensions 1, 11, 21, 31, 41, 51, 61, 71 et 81, qui ont en commun d'utiliser au moins un ressort hélicoïdal 2, 12, 22, 32, 42, 52, 62a et b, 72a et b ou 82a et b, et au moins une armature souple de retenue et de raccordement 3, 13, 23, 33, 43, 53, 63, 73 ou 83 qui, en position d'ordre de marche, contraint tout ou partie du ressort 2, 12, 22, 32, 42, 52, 62a et b, 72a et b ou 82a et b, en le maintenant comprimé pour obtenir deux courbes de raideur différente, dont le point d'inflexion et localisé au voisinage de la position en ordre de marche.

Par rapport à cette position, lors d'une compression l'ensemble du ressort hélicoïdal est alors sollicité tandis que lors d'une détente seule la portion non contrainte dudit ressort est décomprimée.

La suspension est donc asymétrique avec une raideur en détente qui est supérieure à la raideur en compression.

Selon un mode préférentiel de réalisation, la raideur en détente est trois fois supérieure à la raideur en compression.

Quel que soit le mode de réalisation, l'armature de retenue et de raccordement 3, 13, 23, 33, 43, 53, 63, 73 et 83 est constituée, d'une part, de deux éléments de fixation l'un coopérant avec tout ou partie d'une spire du ressort hélicoïdal, l'autre coopérant soit avec tout ou partie d'une autre spire dudit ressort, soit avec le corps de l'amortisseur et, d'autre part, d'un élément longitudinal déformable en compression et indéformable en détente, solidaire des deux éléments de fixation, l'armature circonscrivant et contraignant au moins deux spires du ressort hélicoïdal.

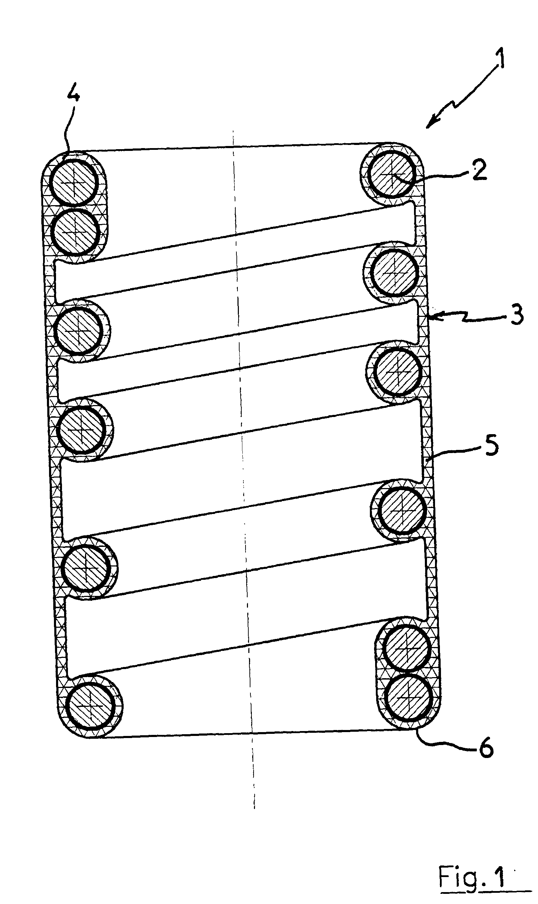

Selon les figures 1 à 3, la suspension 1 est constituée d'un seul ressort hélicoïdal 2 de forme droite.

Celui-ci 2 est noyé par moulage dans une jupe périphérique créant ainsi un volume étanche à l'intérieur du ressort.

En fait, cette jupe constitue l'armature de retenue et de raccordement 3 avec à son extrémité supérieure l'élément de fixation 4 et à son extrémité inférieure l'élément de fixation 6.

Entre les deux, un élément longitudinal 5 ou bande caoutchouteuse sert de lien physique entre les deux éléments de fixation 4 et 6.

Sur ce mode de réalisation, ladite armature 3 circonscrit l'ensemble des spires du ressort.

Selon la figure 1, dans sa position de repos, les flancs de l'armature 3 sont droits. Comme on le remarque sur cette figure, la distance séparant les différentes spires n'est pas constante.

On comprend donc que les spires situées en position supérieure sont déjà précontraintes ce qui n'est pas le cas des spires inférieures.

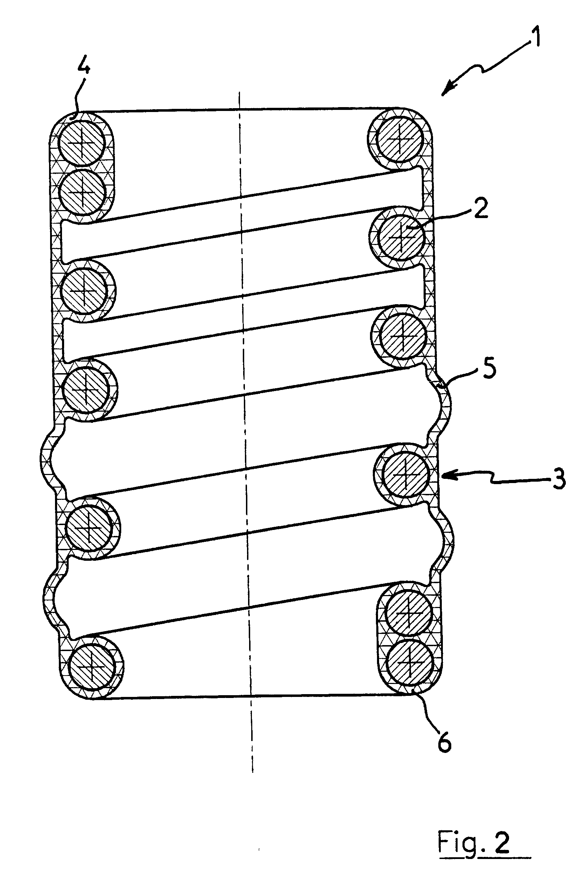

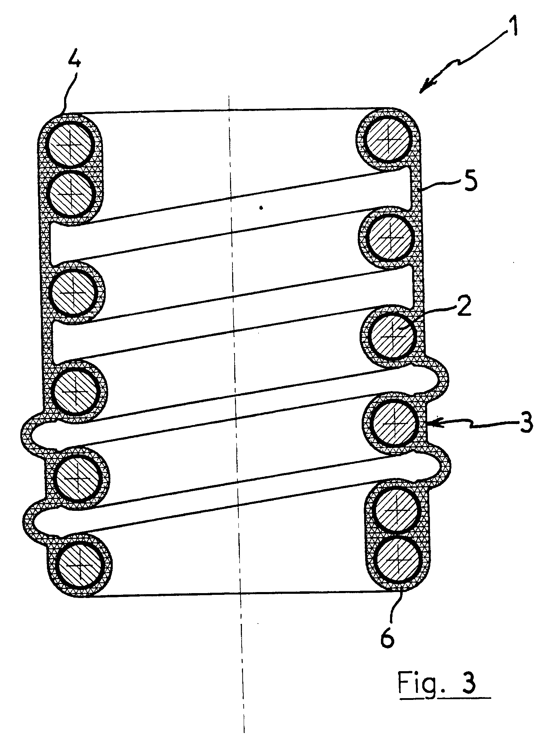

De ce fait, lorsque comme cela est représenté sur les figures 2 et 3, le ressort 2 sera monté sur un véhicule, non représenté sur les figures, les zones ou les spires étaient les plus distantes vont se rapprocher, de sorte qu'il y aura une déformation des flancs de l'armature souple de retenue et de raccordement 3 à ce niveau. Dans cette situation, il s'agit d'une position statique, dans laquelle la compression des spires supérieures de la suspension 1 est équivalente à la pression statique en ordre de marche du véhicule.

La distance entre toutes les spires est donc constante sur cette figure 3.

Il est donc logique que, lors du fonctionnement, les spires vont réagir différemment selon qu'il y ait une détente, auquel cas seules les spires inférieures vont jouer, ou une compression, auquel cas toutes les spires vont pouvoir être utilisées.

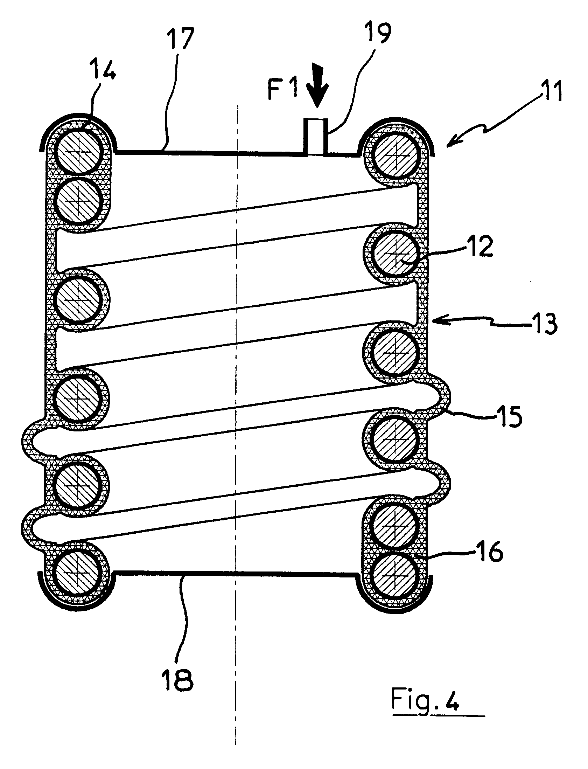

Selon la figure 4, le mode de réalisation présenté précédemment peut être équipé d'une coupelle d'appui supérieure 17 et d'une coupelle d'appui inférieure 18.

Sinon, l'ensemble des composants est identique, il y a, au niveau de cette suspension 11, un ressort 12, une armature de retenue et de raccordement 13, un élément de fixation supérieure 14, un élément de fixation inférieure 16 et entre ces deux éléments 14 et 16, un élément longitudinal 15 ou bande caoutchouteuse.

Cette bande caoutchouteuse 15 surmoule l'ensemble des spires du ressort.

On remarque également qu'au niveau de la coupelle d'appui supérieure 17, est présent un embout 19 par lequel peut être injecté de l'air sous pression selon F1, ce qui va permettre de gonfler l'intérieur de la suspension 11 qui se comportera comme un vérin pneumatique, apportant ainsi une sustentation additionnelle à celle du ressort, afin de faire face aux variations de charge du véhicule.

Bien entendu, il est également possible de ne mettre l'armature souple de retenue et de raccordement 3 ou 13 qu'au niveau de certaines spires du ressort et non pas au niveau de la totalité de ces spires.

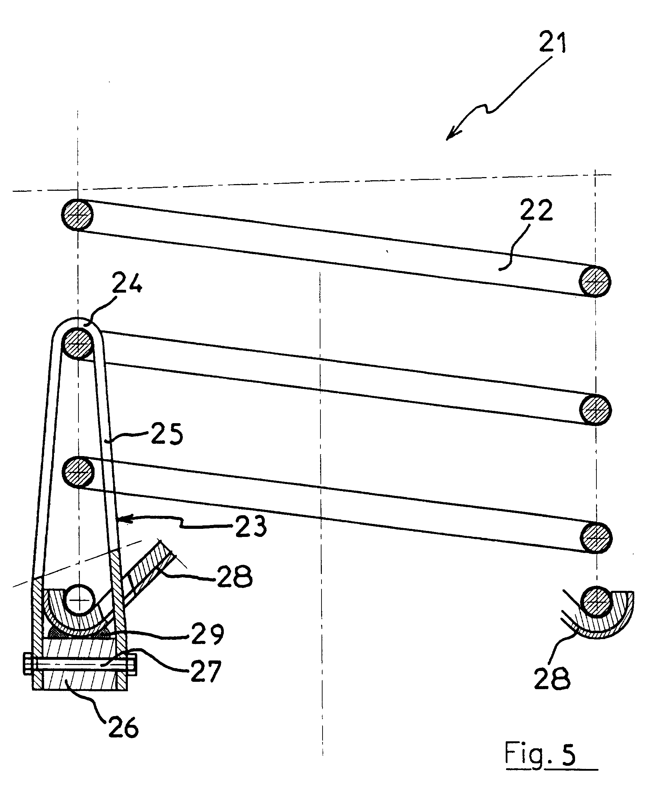

Selon le mode de réalisation de la figure 5, le système est différent de ceux développés précédemment.

Cette suspension 21 comporte également un ressort hélicoïdal 22 et une armature souple de retenue et de raccordement 23, qui est essentiellement constituée d'un élément longitudinal qui comporte deux extrémités libres.

En fait, cette armature 23 est pliée sensiblement au niveau de son milieu pour permettre de créer une boucle qui va constituer l'élément de retenue supérieur 24.

Les deux extrémités libres vont constituer, par l'intermédiaire d'un bloc, l'élément de fixation inférieur 26, qui va coopérer avec une vis 27 ainsi qu'avec une coupelle d'appui inférieure 28 du ressort 22.

La coupelle 28 ayant une forme sensiblement arrondie, la face supérieure de l'élément de fixation inférieure 26, comportera des soudures 29.

Les éléments de fixation 24 et 26 son reliés par la bande caoutchouteuse 25 dédoublée.

Bien entendu, il est possible d'envisager que ce système se retrouve sur toute la circonférence d'une spire du ressort 22 mais selon le mode réalisation représenté sur les figures, cette armature 23 n'est présente qu'à certains endroits. Il peut y en avoir deux, trois, quatre ou plus.

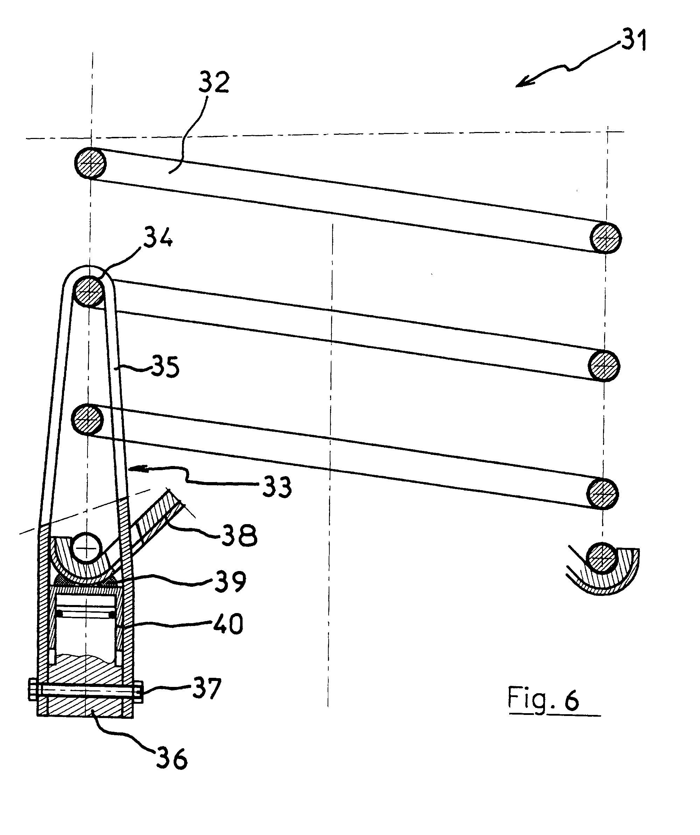

La figure 6 reprend l'essentiel du mode de réalisation précédent. Il s'agit d'une suspension 31 qui comporte un ressort hélicoïdal 32 dont une partie des spires est circonscrite et maintenue en compression par l'intermédiaire de l'armature souple de retenue et de raccordement 33.

Celle-ci comprend un élément de retenue supérieure 34 qui est constituée par la boucle de la bande caoutchouteuse 35, les deux extrémités situées en position inférieure de la bande caoutchouteuse 35 étant solidarisées à l'élément de fixation inférieure 36, constitué par un bloc, par l'intermédiaire de vis 37.

Là encore, la coupelle d'appui inférieure 38 du ressort 32 a une forme légèrement courbe de sorte qu'on utilise des soudures 39.

Néanmoins, le perfectionnement de cette invention réside dans la présence, entre l'élément de fixation inférieure 36 et la coupelle d'appui inférieure 38, d'un vérin 40 qui permet d'adapter la précontrainte à la charge du véhicule.

En fait, ce vérin 40 a la même mission que l'air injecté sous pression selon F1 au niveau de l'embout 19 de la figure 4.

Il s'agit d'une adaptation à la charge statique du véhicule.

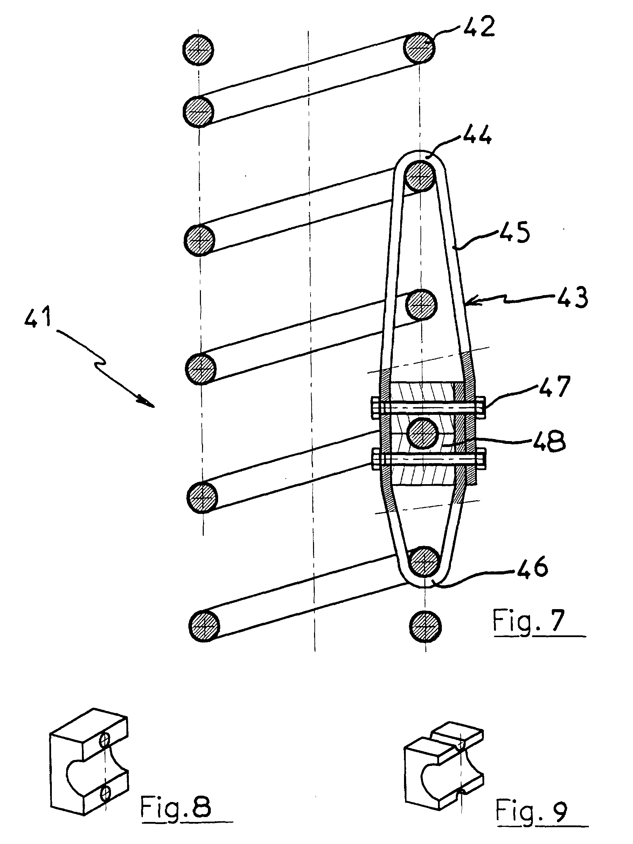

La figure 7 concerne une autre suspension 41 bien adaptée à un ressort hélicoïdal 42 telle que représentée dans lequel certaines spires sont contraintes par l'intermédiaire d'une armature souple de retenue et de raccordement 43. Celle-ci est essentiellement constituée d'une bande caoutchouteuse 45 qui comporte deux boucles l'une inférieure, l'autre supérieure qui constituent respectivement les éléments de retenue inférieure 46 et supérieure 44.

Les deux extrémités libres de la bande caoutchouteuse 45 se retrouvent latéralement juxtaposées. Elles son fixées l'une à l'autre par l'intermédiaire de deux vis 47, chaque vis 47 étant présente de part et d'autre d'une spire du ressort 42.

L'armature souple de retenue et de raccordement 43 n'est pourtant pas en contact avec cette spire puisque sont présents deux coussinets 48 qui permettent de maintenir à distance la partie interne et la partie externe de cette armature 43 qui circonscrit quelques spires du ressort 42.

Bien entendu, comme cela a été évoqué précédemment, on peut éventuellement prévoir que ce système soit présent sur l'ensemble de la circonférence des spires circonscrites ou bien présent en plusieurs exemplaires tout autour de cette circonférence.

D'autres exemples de coussinet sont bien représentés sur les figures 8 et 9. Il comporte, par exemple sur la figure 9, une importante encoche en demi-lune qui permet le bon positionnement de la spire. Les deux demi-encoches en demi-lune supérieures et inférieures permettent le passage des vis 47 de part et d'autre de la spire.

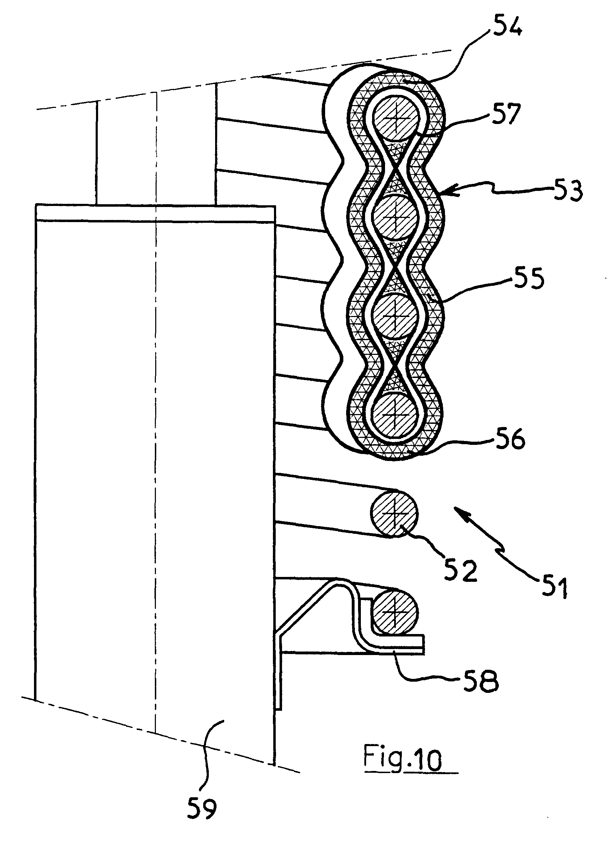

La figure 10 représente une suspension 51 qui est, partiellement représentée. La partie inférieure du ressort 52 est en appui sur une coupelle d'appui inférieure 58, elle-même solidaire d'un amortisseur 59.

Sur cette suspension 51, un certain nombre de spires du ressort hélicoïdal 52 sont circonscrites par l'intermédiaire de l'armature souple de retenue et de raccordement 53.

Cette technique fait appel à la technologie industrielle dérivée de celle des pneumatiques.

L'armature 53 est constituée de sangles qui sont surmoulées sur certaines des spires du ressort hélicoïdal 52, qui est maintenu ainsi compressé à une valeur équivalente à la charge en ordre de marche du véhicule auquel il est destiné.

Ces sangles sont conçues pour ne pas entraver la compression du ressort 52 tandis qu'elles s'opposent à la décompression d'une partie des spires utiles lors de la course de détente.

L'armature interne 57 est conçue pour adoucir la mise en tension et assurer ainsi le bon raccordement entre la raideur en détente et la raideur en compression.

Cette armature 53 est donc constituée en partie supérieure par une boucle caoutchouteuse qui constitue l'élément de fixation supérieure 54 et en partie inférieure d'une boucle caoutchouteuse constituant l'élément de fixation inférieure 56, les deux boucles étant reliées l'une à l'autre par l'élément longitudinal ou bande caoutchouteuse 55, présent à l'intérieur et à l'extérieur des spires.

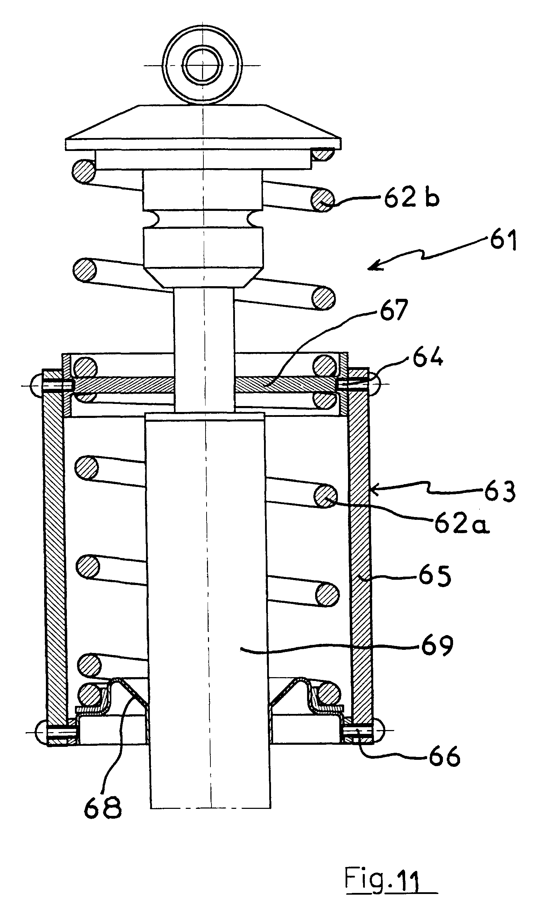

Selon les figures 11 à 14 des modes de réalisation différents sont représentés puisque, à chaque fois, la suspension 61, 71, 81 comporte deux ressorts 62a, 62b, 72a, 72b, 82a, 82b.

Selon la figure 11, la suspension 61 comporte un ressort supérieur 62b et un ressort inférieur 62a.

Le ressort inférieur 62a est entièrement circonscrit entre une coupelle d'appui inférieure 68 et une coupelle d'appui intermédiaire 67.

Entre ces deux coupelles 67 et 68, est présente une armature souple de retenue et de raccordement 63. Celle-ci est constituée de l'élément longitudinal ou bande caoutchouteuse 65 qui est fixée en position supérieure par l'intermédiaire d'un rivet 64 et en position inférieure par l'intermédiaire d'un rivet 66.

Sur la figure deux armatures 63 sont représentées, celles-ci sont placées en opposition.

Il peut y en avoir un nombre différent, trois si elles sont placées à 120° les unes des autres en vue en coupe transversale, ou quatre, c'est-à-dire positionnées à 90° en vue en coupe transversale.

On remarque sur cette figure la présence de l'amortisseur 69.

La coupelle d'appui inférieure 68 est solidarisée à cet amortisseur 69.

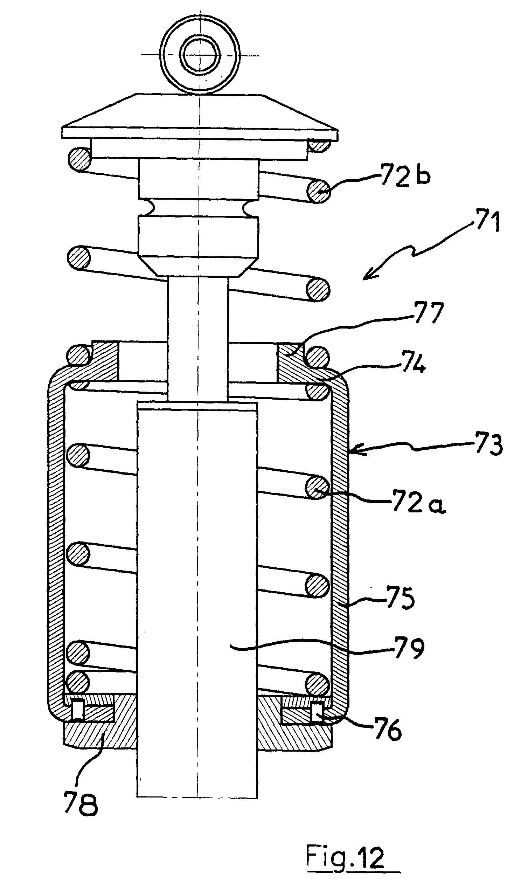

Selon la figure 12, la suspension 71 est également constituée d'un ressort supérieur 72b et d'un ressort inférieur 72a, le ressort inférieur 72a étant circonscrit par une armature souple de retenue et de raccordement 73. Celle-ci comporte un élément de retenue supérieure 74 qui est positionné et permet la fixation, par coincement entre les deux ressorts 72a et 72b, de l'armature 73.

Pour ce faire également, il comporte un élargissement au niveau de l'extrémité représenté sur les figures.

Cet élargissement est en fait constitué par une coupelle caoutchouteuse 77 qui solidarise l'ensemble des armatures de retenue et de raccordement 73 dont on voit deux exemplaires sur cette figure.

En position inférieure, l'armature 73 comporte un élément de fixation inférieure 76 constitué par un rivet, qui est relié à la coupelle caoutchouteuse 77 par une bande caoutchouteuse 75.

Celui-ci permet la fixation par rapport à une coupelle d'appui inférieure 78, la coupelle 78 étant solidaire de l'amortisseur 79.

Sur ce mode de réalisation, la coupelle caoutchouteuse 77 est solidarisée à deux armatures 73 mais il peut y en avoir trois, quatre ou plus.

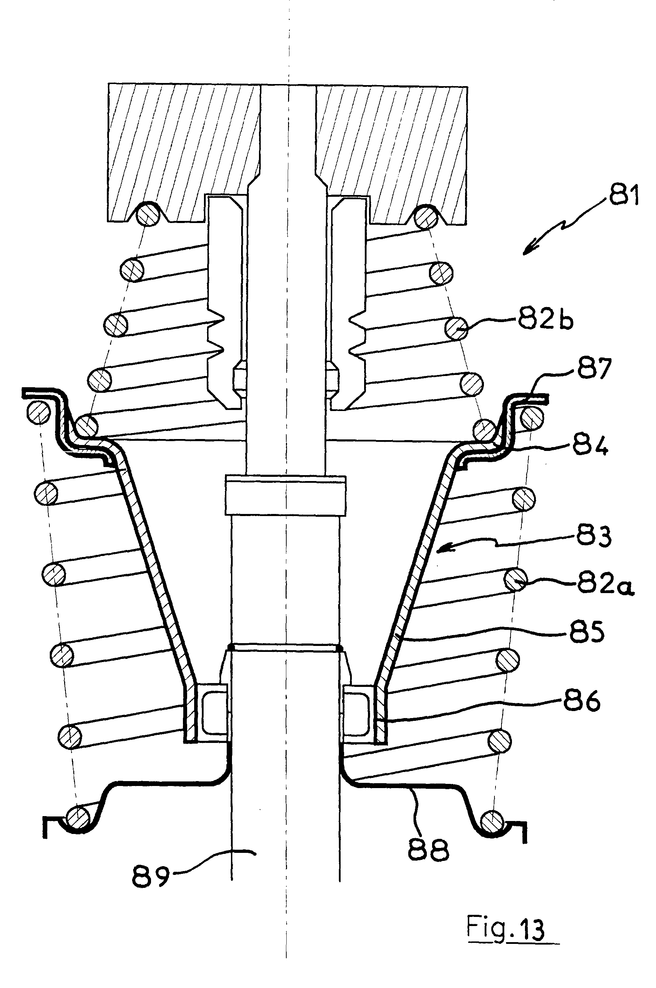

Enfin, la figure 13 représente le dernier mode de réalisation de la présente invention.

Il s'agit d'une suspension 81 comportant des ressorts hélicoïdaux dont la forme générale est tronconique.

Sur cette figure, on remarque que la suspension 81 comporte entre les deux ressorts 82b et 82a, une coupelle d'appui intermédiaire 87. Celle-ci a une forme sensiblement de S, l'une des gorges créée par ce S permet le positionnement de la spire supérieure du ressort inférieure 82a, alors que l'autre gorge du S permet la solidarisation, d'une part, de l'extrémité supérieure de l'armature souple de retenue et de raccordement 83 constituant l'élément de fixation supérieure 84 et, d'autre part, de la spire inférieure du ressort supérieur 82b. Cette armature 83 est constituée d'une jupe souple de forme conique.

Dans cette position, la suspension est en position statique.

L'amortisseur 89 est solidarisé à la coupelle d'appui inférieure 88 qui reçoit la spire inférieure du ressort inférieur 82a.

L'armature 83 est fixée par l'intermédiaire d'un élément de fixation inférieure 86 sur le corps de l'amortisseur 89, les deux éléments de fixation 84 et 86 étant reliés l'un à l'autre par un élément longitudinal 85.

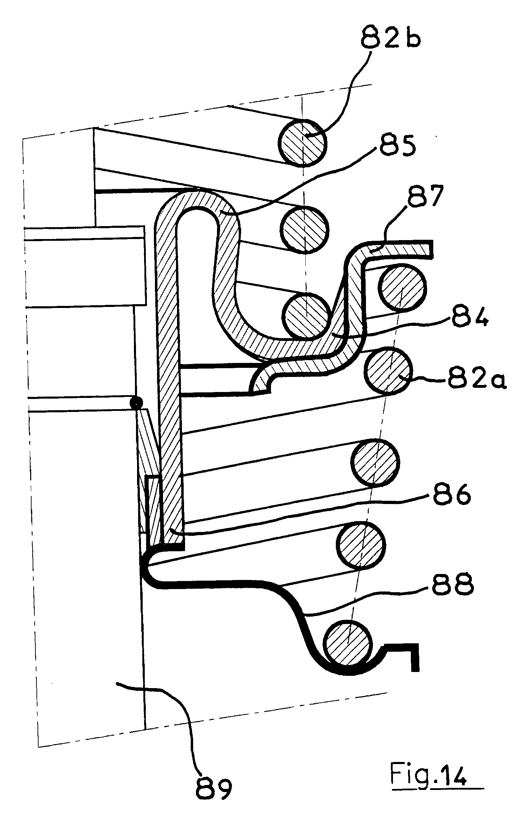

Selon la figure 14, on remarque un détail de la figure 13 lorsque la compression des ressorts 82a et b est réalisée.

Dans ce cas, ladite armature 83 va être pliée pour permettre la compression de l'ensemble des spires des ressorts 82a et b.

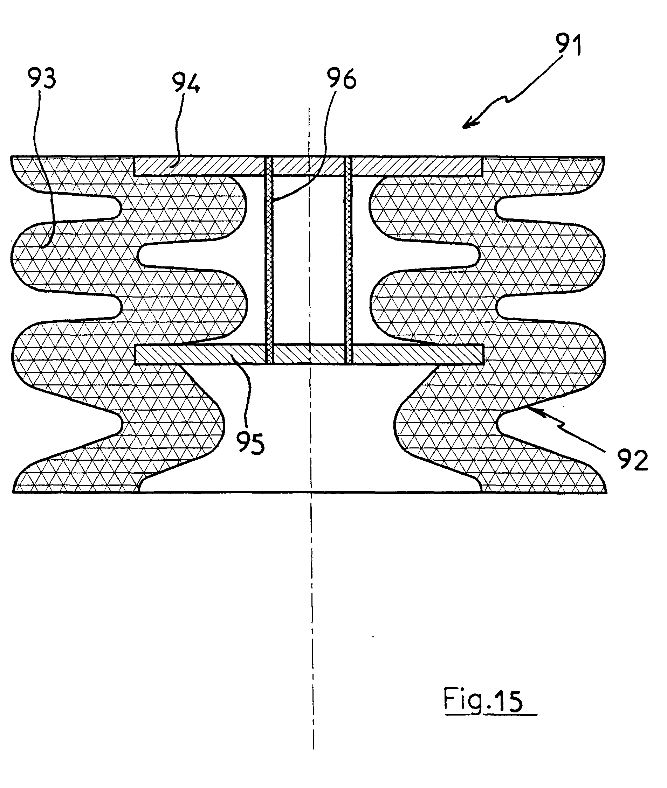

Selon les figures 15, 16 et 17, on comprend bien le fonctionnement du système.

Ainsi, le ressort hélicoïdal est remplacé par un ressort caoutchouteux 92 qui comporte un certain nombre de plis 93 eux aussi en caoutchouc.

Certains de ces plis 93 sont confinés entre deux coupelles d'appui supérieure 94 et intermédiaire 95.

Pour le bon fonctionnement de cette suspension 91, les deux coupelles 94 et 95 sont reliées par des câbles métalliques 96 qui sont déformables lors de la compression mais indéformables lors de la détente.

Ainsi, sur la figure 15, la suspension est dans l'état de repos, c'est-à-dire que la partie confinée est compressée alors que la partie non confinée ne l'est pas.

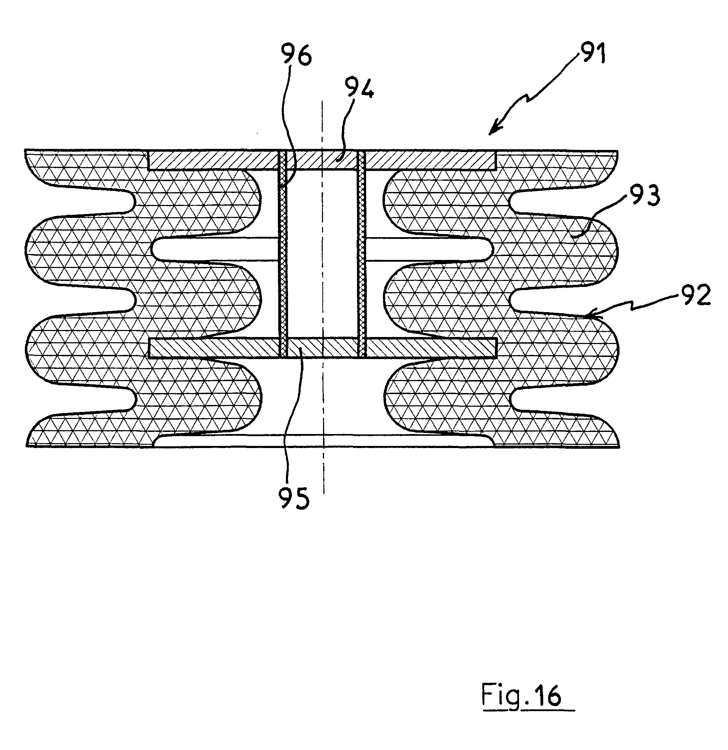

Selon la figure 16, les plis 93 de la partie confinée et non confinée ont la même physionomie de sorte que le véhicule est en position en ordre de marche statique.

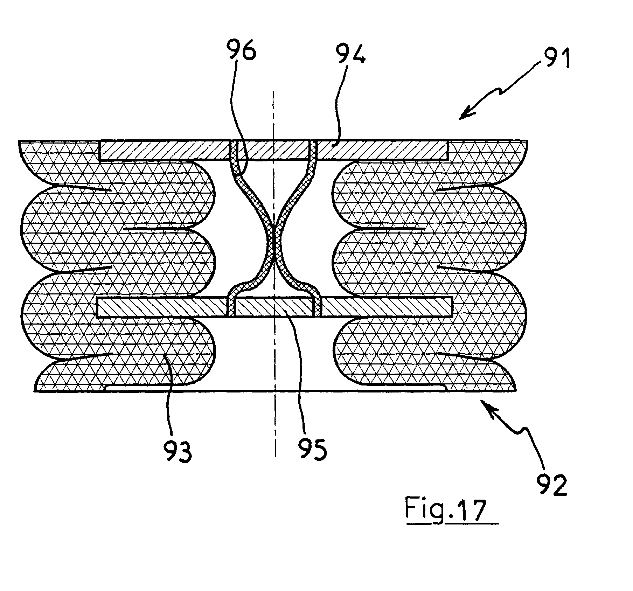

Enfin, la figure 17 représente le mode de réalisation lors d'une compression complète de la suspension 91.

Dans ce cas, l'ensemble des plis 93 a une forme identique c'est-à-dire complètement compressée alors que les câbles métalliques 96 sont détendus, permettant ainsi le rapprochement des coupelles d'appui 94 et 95.

### REFERENCES

1. Suspension
2. Ressort hélicoïdal
3. Armature souple de retenue et de raccordement
4. Elément de fixation supérieure de l'armature 3
5. Elément longitudinal ou bande caoutchouteuse
6. Elément de fixation inférieure de l'armature 3
11. Suspension
12. Ressort hélicoïdal
13. Armature souple de retenue et de raccordement
14. Elément de fixation supérieure de l'armature 13
15. Elément longitudinal ou bande caoutchouteuse
16. Elément de fixation inférieure de l'armature 13
17. Coupelle d'appui supérieure
18. Coupelle d'appui inférieure
19. Embout de la coupelle 17
21. Suspension
22. Ressort hélicoïdal
23. Armature souple de retenue et de raccordement
24. Elément de retenue supérieure de l'armature 23
25. Elément longitudinal ou bande caoutchouteuse
26. Elément de fixation inférieure de l'armature 23
27. Vis
28. Coupelle d'appui inférieure
29. Soudures
31. Suspension
32. Ressort hélicoïdal
33. Armature souple de retenue et de raccordement
34. Elément de retenue supérieure de l'armature 33
35. Elément longitudinal ou bande caoutchouteuse
36. Elément de fixation inférieure de l'armature 33
37. Vis
38. Coupelle d'appui inférieur
39. Soudures
40. Vérin
41. Suspension
42. Ressort hélicoïdal
43. Armature souple de retenue et de raccordement
44. Elément de retenue supérieure de l'armature 43
45. Elément longitudinal ou bande caoutchouteuse
46. Elément de retenue inférieure de l'armature 43
47. Vis
48. Coussinet
51. Suspension
52. Ressort hélicoïdal
53. Armature souple de retenue et de raccordement
54. Elément de fixation supérieure de l'armature 53
55. Elément longitudinal ou bande caoutchouteuse
56. Elément de fixation inférieure de l'armature 53
57. Armature métallique
58. Coupelle d'appui inférieure
59. Amortisseur
61. Suspension
62a. Ressort hélicoïdal circonscrit
62b. Ressort hélicoïdal non circonscrit
63. Armature souple de retenue et de raccordement
64. Elément de fixation supérieure de l'armature 63 ou rivet
65. Elément longitudinal ou bande caoutchouteuse
66. Elément de fixation inférieure de l'armature 63 ou rivet
67. Coupelle d'appui intermédiaire
68. Coupelle d'appui inférieure
69. Amortisseur
71. Suspension
72a. Ressort hélicoïdal circonscrit
72b. Ressort hélicoïdal non circonscrit
73. Armature souple de retenue et de raccordement
74. Elément de retenue supérieure de l'armature 73
75. Elément longitudinal ou bande caoutchouteuse
76. Elément de fixation inférieure de l'armature 73 ou rivet
77. Coupelle caoutchouteuse solidaire des éléments 74
78. Coupelle d'appui inférieure
79. Amortisseur
81. Suspension
82a. Ressort hélicoïdal circonscrit
82b. Ressort hélicoïdal non circonscrit
83. Armature souple de retenue et de raccordement
84. Elément de fixation supérieure de l'armature 83
85. Elément longitudinal ou bande caoutchouteuse
86. Elément de fixation inférieure de l'armature 83
87. Coupelle d'appui intermédiaire
88. Coupelle d'appui inférieure
89. Amortisseur
91. Suspension
92. Ressort caoutchouteux
93. Plis du ressort 92
94. Coupelle d'appui supérieure
95. Coupelle d'appui intermédiaire
96. Câbles métalliques
F1. Arrivée d'air au niveau de l'embout 19

## Revendications

1. Suspension (1, 11, 21, 31, 41, 51, 61, 71 ou 81) de roue de véhicule utilisant au moins un ressort hélicoïdal (2, 12, 22, 32, 42, 52, 62a et b, 72a et b, ou 82a et b), et au moins une armature souple de retenue et de raccordement (3, 13, 23, 33, 43, 53, 63, 73 ou 83), qui en position d'ordre de marche, contraint une portion du ressort (2, 12, 22, 32, 42, 52, 62, 72, 82a et b) en le maintenant comprimé, pour obtenir deux courbes de raideurs différentes dont le point d'inflexion est localisé au voisinage de la position en ordre de marche ; par rapport à cette position, lors d'une compression, l'ensemble du ressort hélicoïdal (2, 12, 22, 32, 42, 52, 62, 72, 82a et b) est comprimé alors que, lors d'une détente, seule la portion non contrainte dudit ressort (2, 12, 22, 32, 42, 52, 62, 72, 82a et b) est décomprimée, la suspension (1, 11, 21, 31, 41, 51, 61, 71 ou 81) étant donc asymétrique avec une raideur en détente qui est supérieure à la raideur en compression, **caractérisée par le fait**
**que** chaque armature (3, 13, 23, 33, 43, 53, 63, 73 ou 83) est constituée, d'une part, de deux éléments de fixation et de retenue, l'un (4, 14, 24, 34, 44, 54, 64, 74 ou 84) coopérant avec tout ou partie d'une spire du ressort hélicoïdal (2, 12, 22, 32, 42, 52, 62, 72, 82a et b), l'autre (6, 16, 26, 36, 46, 56, 66, 76 ou 86) coopérant soit avec tout ou partie d'une autre spire dudit ressort (2, 12, 22, 32, 42, 52, 62, 72, 82a et b), soit avec le corps de l'amortisseur (59, 69, 79 ou 89), et d'autre part, d'un élément longitudinal (5, 15, 25, 35, 45, 55, 65, 75 ou 85), déformable en compression et indéformable en détente, solidaire des deux éléments de fixation et de retenue, l'armature circonscrivant et contraignant au moins deux spires du ressort hélicoïdal (2, 12, 22, 32, 42, 52, 62, 72, 82a et b).

2. Suspension (1, 11 ou 51), selon la revendication 1, qui utilise un seul ressort hélicoïdal (2, 12 ou 52) et au moins une armature souple de retenue et de raccordement (3, 13 ou 53) où les deux éléments de fixation (4 et 6, 14 et 16 ou 54 et 56) de chaque armature (3, 13 ou 53) coopèrent avec tout ou partie de deux spires du ressort hélicoïdal (2, 12 ou 52), **caractérisée par le fait**
**que** chaque armature (3, 13 ou 53) est constituée d'une bande caoutchouteuse (5, 15 ou 55) qui circonscrit tout ou partie d'au moins deux spires dudit ressort (2, 12 ou 52), les éléments de fixation (4 et 6, 14 et 16 ou 54 et 56) étant constitués par des boucles de la bande caoutchouteuse et les deux extrémités libres étant solidarisées l'une à l'autre.

3. Suspension (21, 31 ou 41), selon la revendication 1, qui utilise un seul ressort hélicoïdal (22, 32 ou 42) et au moins une armature souple de retenue et de raccordement (23, 33 ou 43) où les deux éléments de fixation et de retenue (24 et 26, 34 et 36 ou 44 et 46) de chaque armature (23, 33 ou 43) coopèrent respectivement avec tout ou partie d'une des spires du ressort hélicoïdal (22, 32 ou 42) et avec le corps de l'amortisseur, **caractérisé par le fait**
**que** chaque armature (23, 33 ou 43) est constituée d'une bande caoutchouteuse qui circonscrit tout ou partie d'au moins deux spires dudit ressort (22, 32 ou 42), les éléments de fixation et de retenue (24 et 26, 34 et 36 ou 44 et 46) étant constitués par une boucle de la bande caoutchouteuse au niveau de la spire et par les deux extrémités libres de ladite bande solidarisées au corps de l'amortisseur.

4. Suspension (1, 11 ou 51), selon l'une quelconque des revendications 2 ou 3, où l'armature souple de retenue et de raccordement (3, 13 ou 53) comporte deux demi-bandes caoutchouteuses situées l'une à l'intérieur, l'autre à l'extérieur de la forme tubulaire ou tronconique constituée par les spires du ressort hélicoïdal (2, 12 ou 52), **caractérisée par le fait**
**que** les demi-bandes extérieure et intérieure sont solidarisées l'une à l'autre entre tout ou partie de deux spires circonscrites et adjacentes.

5. Suspension (51), selon la revendication 4, **caractérisée par le fait**
**que** la solidarisation des demi-bandes s'effectue dans le plan de la forme tubulaire ou tronconique constitué par les spires du ressort hélicoïdal (52).

6. Suspension (1 ou 11), selon la revendication 4, **caractérisée par le fait**
**que** la solidarisation des demi-bandes s'effectue à l'extérieur du plan de la forme tubulaire ou tronconique constitué par les spires du ressort hélicoïdal (2 ou 12).

7. Suspension (61, 71 ou 81), selon la revendication 1, qui utilise deux ressorts hélicoïdaux (62a et b, 72a et b ou 82a et b) montés en série et au moins une armature de retenue et de raccordement (63, 73 ou 83) où les deux éléments de fixation et de retenue (64 et 66, 74 et 76 ou 84 et 86) de chaque armature (63, 73 ou 83) coopèrent respectivement avec tout ou partie d'une des spires d'un des ressorts hélicoïdaux (62a et b, 72a et b ou 82a et b) et avec le corps de l'amortisseur (69, 79 ou 89), **caractérisée par le fait**
**que** chaque armature (63, 73 ou 83) est constituée d'une bande caoutchouteuse qui comporte à ces deux extrémités libres, d'une part, un des éléments de fixation ou de retenue (64, 74 ou 84) fixé entre les deux ressorts hélicoïdaux (62a et b, 72a et b ou 82a et b) et, d'autre part, l'autre élément de fixation (66, 76 ou 86) solidarisé au corps de l'amortisseur (69, 79 ou 89).

8. Suspension (61, 71 ou 81), selon la revendication 7, **caractérisée par le fait**
**que** l'élément de fixation (64, 74 ou 84), fixé entre les deux ressorts hélicoïdaux (62a et b, 72a et b ou 82a et b), est solidaire d'une coupelle d'appui (67, 77 ou 87) qui sert d'interface entre les deux ressorts (62a et b, 72a et b ou 82a et b).

9. Suspension (61 ou 71), selon la revendication 7, qui est constituée d'au moins deux armatures souple de retenue et de raccordement (63 ou 73), **caractérisée par le fait**
**que** les éléments de fixation ou de retenue (64 ou 74), fixés entre les deux ressorts hélicoïdaux (62a et b ou 72a et b), sont solidarisés par l'intermédiaire d'une coupelle flottante (67 ou 77) qui sépare les deux ressorts (62a et b ou 72a et b).

10. Suspension (1, 11, 21, 31, 41, 51, 61, 71 ou 81), selon l'une quelconque des revendications 1 à 9, **caractérisée par le fait**
**que** les armatures souples de retenue et de raccordement (3, 13, 23, 33, 43, 53, 63, 73 ou 83) sont caoutchouteuses et renferment des câbles (57) qui rendent les armatures déformables en compression et indéformables en détente.

11. Suspension (1, 11, 21, 31, 41, 51, 61, 71 ou 81), selon l'une quelconque des revendications 1 à 10, **caractérisée par le fait**
**que** chaque armature souple de retenue et de raccordement (3, 13, 23, 33, 43, 53, 63, 73 ou 83) est équipée d'un vérin (40) permettant de régler la contrainte.

12. Suspension (91) de roue de véhicule utilisant au moins un ressort caoutchouteux (92), et au moins une armature de retenue et de raccordement, qui en position d'ordre de marche, contraint une portion de ressort (92) en le maintenant comprimé pour obtenir deux courbes de raideurs différentes dont le point d'inflexion est localisé au voisinage de la position en ordre de marche ; par rapport à cette position, lors d'une compression, l'ensemble du ressort caoutchouteux (92) est comprimé alors que, lors d'une détente, seule la portion non contrainte dudit ressort (92) est décomprimée, la suspension (91) étant donc asymétrique avec une raideur en détente qui est supérieure à la raideur en compression, **caractérisée par le fait**
**que** chaque armature de retenue et de raccordement est constituée, d'une part, de deux éléments de fixation, l'un (94) coopérant avec une partie du ressort caoutchouteux (92), l'autre (95) coopérant avec une autre partie dudit ressort (92), et d'autre part, d'au moins un élément longitudinal (96) déformable en compression et indéformable en détente, solidaire des deux éléments de fixation, l'armature de retenue et de raccordement circonscrivant et contraignant au moins sur tout ou partie de la longueur le ressort caoutchouteux (92).

13. Suspension, selon la revendication 12, **caractérisée par le fait**
**que** les éléments de fixation (94 et 95) sont constitués par une coupelle d'appui supérieure (94) et une coupelle d'appui inférieure (95), reliées l'une à l'autre par des éléments longitudinaux (96) ou câbles.

## Patentansprüche

1. Fahrzeugradaufhängung (1, 11, 21, 31, 41, 51, 61, 71 oder 81) mit mindestens einer Spiralfeder (2, 12, 22, 32, 42, 52, 62a und b, 72a und b oder 82a und b) und mindestens einer flexiblen Armatur zur Verstärkung und Befestigung (3, 13, 23, 33, 43, 53, 63, 73 oder 83), die in Fahrstellung einen Teil der Feder (2, 12, 22, 32, 42, 52, 62, 72, 82a und b) zusammengedrückt hält und dadurch zwei verschiedene Steifigkeitskurven erzielt, deren Knickpunkt sich in der Umgebung der Fahrstellung befindet, wobei, in bezug auf diese Position, bei einer Druckbelastung die gesamte Spiralfeder (2, 12, 22, 32, 42, 52, 62, 72, 82a und b) zusammengedrückt wird, während sich beim Entspannen nur der nicht zusammengedrückte Teil dieser Feder (2, 12, 22, 32, 42, 52, 62, 72, 82a und b) öffnet, die Aufhängung (1, 11, 21, 31, 41, 51, 61, 71 oder 81) somit asymmetrisch reagiert, d.h. die Steifigkeit beim Entspannen höher als die Steifigkeit beim Zusammendrücken ist, **dadurch gekennzeichnet,**
**dass** jede Armatur (3, 13, 23, 33, 43, 53, 63, 73 oder 83) einerseits aus zwei Befestigungs- und Verstärkungselementen besteht, von denen eines (4, 14, 24, 34, 44, 54, 64, 74 oder 84) mit einer ganzen oder dem Teil einer Windung der Spiralfeder (2, 12, 22, 32, 42, 52, 62, 72, 82a und b) und das andere (6, 16, 26, 36, 46, 56, 66, 76 oder 86) mit einer ganzen oder dem Teil der anderen Windung der besagten Feder (2, 12, 22, 32, 42, 52, 62a und b, 72 oder 82a und b) oder mit dem Körper des Stossdämpfers (59, 69, 79 oder 89) zusammenwirkt und andererseits ein in Längsrichtung angeordnetes Element enthält (5, 15, 25, 35, 45, 55, 65, 75 oder 85), das unter Druck verformbar und beim Entspannen nicht verformbar und mit den beiden Befestigungs- und Verstärkungselementen fest verbunden ist, wobei die Armatur mindestens zwei Windungen der Spiralfeder (2, 12, 22, 32, 42, 52, 62, 72, 82a und b) umschliesst und hält.

2. Aufhängung (1, 11, oder 51) gemäss Anspruch 1 mit einer einzigen Spiralfeder (2, 12 oder 52) und mindestens einer flexiblen Verstärkungs- und Befestigungsarmatur (3, 13 oder 53) wo die beiden Befestigungselemente (4 und 6, 14 und 16 oder 54 und 56) jeder Armatur (3, 13 oder 53) ganz oder teilweise mit zwei Windungen der Spiralfeder (2, 12 oder 52) zusammenwirken, **dadurch gekennzeichnet,**
**dass** jede Armatur (3, 13 oder 53) aus einem gummiartigen Band (5, 15 oder 55) besteht, das mindestens zwei Windungen der besagten Feder (2, 12 oder 52) ganz oder teilweise umschliesst, wobei die Befestigungselemente (4 und 6, 14 und 16 oder 54 und 56) aus Schlingen des Gummibandes bestehen und die freien Enden miteinander verbunden sind.

3. Aufhängung (21, 31 oder 41) gemäss Anspruch 1 mit einer einzigen Spiralfeder (22, 32 oder 42) und mindestens einer flexiblen Verstärkungs- und Befestigungsarmatur (23, 33 oder 43) bei der jedes der beiden Verstärkungs- und Befestigurigselemente (24 und 26, 34 und 36 oder 44 und 46) jeder Armatur (23, 33 oder 43) mit einer ganzen oder dem Teil einer Windung der Spiralfeder (22, 32 oder 42) und dem Stossdämpferkörper zusammenwirken, **dadurch gekennzeichnet,**
**dass** jede Armatur (23, 33 oder 43) aus einem gummiartigen Band besteht, das mindestens zwei Windungen der besagten Feder (22, 32 oder 42) ganz oder teilweise umschliesst, wobei die Verstärkungs- und Befestigungselemente (24 und 26, 34 und 36 oder 44 und 46) aus einer Schlinge des gummiartigen Bandes in Höhe der Windung besteht und die beiden freien Enden des betreffenden Bandes mit dem Körper des Stossdämpfers verbunden sind.

4. Aufhängung (1, 11 oder 51) gemäss einem der Ansprüche 2 oder 3, bei der die flexible Verstärkungs- und Befestigungsarmatur (3, 13 oder 53) zwei gummiartige Halbbänder besitzt, von denen je eines auf der Innen- und der Aussenseite der von den Windungen der Spiralfeder (2, 12 oder 52) gebildeten rohr- oder kegelstumpfartigen Form angeordnet sind, **dadurch gekennzeichnet,**
**dass** die beiden innen und aussen liegenden Halbbänder miteinander zwischen zwei umschliessenden und benachbarten, ganzen oder teilweisen Windungen verbunden sind.

5. Aufhängung (51) gemäss Anspruch 4, **dadurch gekennzeichnet,**
**dass** die Verbindung der beiden Halbbänder in der von den Windungen der Spiralfeder (52) aufgespannten Ebene des rohr- oder kegelstumpfförmigen Gebildes erfolgt.

6. Aufhängung (1 oder 11) gemäss Anspruch 4, **gekennzeichnet dadurch,**
**dass** die Verbindung der beiden Halbbänder ausserhalb der von den Windungen der Spiralfeder (2 oder 12) aufgespannten Ebene des rohr- oder kegelstumpfförmigen Gebildes hergestellt wird.

7. Aufhängung (61, 71 oder 81) gemäss Anspruch 1 mit zwei in Serie geschalteten Spiralfedern (62a und b, 72a und b oder 82a und b) und mindestens einer Befestigungs- und Verstärkungsarmatur (63, 73 oder 83), bei der die beiden Befestigungs- und Verstärkungselemente (64 und 66, 74 und 76 oder 84 und 86) jeder Armatur (63, 73 oder 83) jeweils ganz oder teilweise mit einer der Windungen einer der Spiralfedern (62a und b, 72a und b oder 82a und b) und dem Körper des Stossdämpfers (69, 79 oder 89) zusammenwirken, **dadurch gekennzeichnet,**
**dass** jede Armatur (63, 73 oder 83) aus einem gummiartigen Band besteht, das an seinen beiden freien Enden sowohl eines der zwischen den beiden Spiralfedern (62a und b, 72a und b oder 82a und b) angebrachten Befestigungs- und Verstärkungselemente (64, 74 oder 84) als auch das andere, mit dem Körper des Stossdämpfers (69, 79 oder 89) verbundene Befestigungselement (66, 76 oder 86) aufweist.

8. Aufhängung (61, 71 oder 81) gemäss Anspruch 7, **dadurch gekennzeichnet,**
**dass** das zwischen den beiden Spiralfedern (62a und b, 72a und b oder 82a und b) befestigte Befestigungselement (64, 74 oder 84) mit einer Auflageschale (67, 77 oder 87) verbunden ist, die als Schnittstelle zwischen beiden Federn (62a und b, 72a und b oder 82a und b) dient.

9. Aufhängung (61 oder 71) gemäss Anspruch 7, bestehend aus mindestens zwei flexiblen Verstärkungs- und Verbindungsarmaturen (63 oder 73), **dadurch gekennzeichnet,**
**dass** die beiden Befestigungs- und Verstärkungselemente (64 oder 74), die zwischen den beiden Spiralfedern (62a und b oder 72a und b) befestigt sind, mit Hilfe einer verschiebbar gelagerten Schale (67 oder 77) verbunden sind, welche die beiden Federn (62a und b oder 72a und b) voneinander trennt.

10. Aufhängung (1, 11, 21, 31, 41, 51, 61, 71 oder 81) gemäss einem der Ansprüche 1 bis 9, **dadurch gekennzeichnet,**
**dass** die flexiblen Verstärkungs- und Befestigungsarmaturen (3, 13, 23, 33, 43, 53, 63, 73 oder 83) gummiartig sind und Seile (57) enthalten, welche die Armaturen unter Druckbelastung verformbar, jedoch beim Entspannen nicht verformbar machen.

11. Aufhängung (1, 11, 21, 31, 41, 51, 61, 71 oder 81) gemäss einem der Ansprüche 1 bis 10, **dadurch gekennzeichnet,**
**dass** jede flexible Verstärkungs- und Befestigungsarmatur (3, 13, 23, 33, 43, 53, 63, 73 oder 83) ein Stellelement (40) zur Einstellung der Spannung besitzt.

12. Fahrzeugradaufhängung (91) mit mindestens einer gummiartigen Feder (92) und mindestens einer Verstärkungs- und Befestigungsarmatur, die in Fahrstellung einen Teil der Feder (92) zusammengedrückt hält, um zwei verschiedene Steifigkeitskurven zur erzielen, deren Knickpunkt in der Nähe der Fahrstellungspunkts liegt, wobei in bezug auf diesen Punkt bei einer Druckbelastung die gesamte gummiartige Feder (92) zusammengedrückt wird, während sich bei einer Entspannung nur der nicht gehaltene Teil dieser Feder (92) wieder öffnet, d.h. die Aufhängung (91) verhält sich unsymmetrisch, wobei die Steifigkeit beim Entspannen höher ist als beim Zusammendrücken, **dadurch gekennzeichnet,**
**dass** die Verstärkungs- und Befestigungsarmatur einerseits aus zwei Befestigungselementen besteht, von denen eines. (94) mit einem Teil der gummiartigen Feder (92) zusammenwirkt und das andere (95) mit einem Teil der besagten Feder (92), und das andererseits aus mindestens einem in Längsrichtung angeordneten und unter Druck verformbaren, hingegen bei Entspannung nicht verformbaren Elements (96) besteht, das mit den beiden Befestigungselementen fest verbunden ist, und dass die Verstärkungs- und Befestigungsarmatur die gummiartige Feder (92) mindestens über einen Teil seiner Länge umschliesst und hält.

13. Aufhängung gemäss Anspruch 12, **dadurch gekennzeichnet,**
**dass** die Befestigungselemente (94 und 95) aus einer oberen (94) und einer unteren Auflageschale (95) bestehen, die durch in Längsrichtung angeordnete Elemente (96) oder Seile miteinander verbunden sind.

## Claims

1. Vehicle wheel suspension (1, 11, 21, 31, 41, 51, 61, 71 or 81) using at least a helicoidal spring (2, 12, 22, 32, 42, 52, 62a and b, 72a and b, or 82a and b) combined with at least one flexible restraining and connecting armouring (3, 13, 23, 33, 43, 53, 63, 73 or 83) which when used constrains a part of the spring (2, 12, 22, 32, 42, 52, 62, 72, 82a and b) and maintains it compressed in order to obtain two different stiffness curves, the point of inflection of which is located close to the position in use ; during compression, all the helicoidal spring (2, 12, 22, 32, 42, 52, 62, 72, 82a and b) relative to this position is compressed whereas, on relaxation, only the unconstrained part of the aforesaid spring (2, 12, 22, 32, 42, 52, 62, 72, 82a and b) is relaxed, the suspension (1, 11, 21, 31, 41, 51, 61, 71 or 81) thus being asymmetrical with a relaxation stiffness that is higher than the compression stiffness, **characterized by** the fact that
each armouring (3, 13, 23, 33, 43, 53, 63, 73 or 83) consists of two securing and restraining elements, one (4, 14, 24, 34, 44, 54, 64, 74 or 84) acting with all or part of a coil of the helicoidal spring (2, 12, 22, 32, 42, 52, 62, 72, 82a and b), the other (6, 16, 26, 36, 46, 56, 66, 76 or 86) acting either with all or part of another coil of the said spring (2, 12, 22, 32, 42, 52, 62, 72, 82a and b), or with the body of the spring (59, 69, 79 or 89), and a longitudinal element (5, 15, 25, 35, 45, 55, 65, 75 or 85), deformable in compression and indeformable in relaxation, forming an integral part of the two securing and restraining elements, the reinforcement enclosing and compressing at least two coils of the helicoidal spring (2, 12, 22, 32, 42, 52, 62, 72, 82a and b)

2. Suspension (1, 11 or 51), according to claim 1, which uses only one helicoidal spring (2, 12 or 52) and at least one flexible armouring (3, 13 or 53) for restraining and connecting coils on which two securing elements (4 and 6, 14 and 16 or 54 and 56) of each armouring (3, 13 or 53) act with all or part of two coils of the helicoidal spring (2, 12 or 52), **characterized by** the fact that
each armouring (3, 13 or 53) consists of a band in rubbery material (5, 15 or 55) which encloses all or part of at least two coils of the aforesaid spring (2, 12 or 52), the securing elements (4 and 6, 14 and 16 or 54 and 56) consisting of the band in rubbery material with the two loose ends joined one to the other.

3. Suspension (21, 31 or 41), according to claim 1, which uses only one helicoidal spring (22, 32 or 42) and at least one flexible armouring (23, 33 or 43) for restraining and connecting in which the two securing and restraining elements (24 and 26, 34 and 36 or 44 and 46) of each armouring (23, 33 or 43) act with all or part of one of the helicoidal spring (22, 32 or 42) coils and with the spring body respectively, **characterized by** the fact that
each armouring (23, 33 or 43) consists of a band in rubbery material which encloses all or part of at least two coils of the aforesaid spring (22, 32 or 42), the securing and restraining elements (24 and 26, 34 and 36 or 44 and 46) consisting of a loop of the band in rubbery material at the level of the coil and two loose ends of the aforementioned band joined to the body of the spring.

4. Suspension (1, 11 or 51), according to any of claims 2 or 3, in which the restraining and connecting flexible armouring (3, 13 or 53) comprises two half-bands in rubbery material located one on the inside, the other on the outside of the tubular or truncated shape created by the coils of the helicoidal spring (2, 12 or 52), **characterized by** the fact that
the outer and inner half-bands are joined one to the other between all or part of the two enclosed and adjacent coils.

5. Suspension (51) according to claim 4, **characterized by** the fact that
the half-bands are joined in the plane of the tubular or truncated shape created by the coils of the helicoidal spring (52).

6. Suspension (1 or 11), according to claim 4, **characterized by** the fact that
the half-bands are joined outside the phase of the tubular or truncated shape created by the coils of the helicoidal spring (2 or 12).

7. Suspension (61, 71 or 81), according to claim 1, which uses two helicoidal springs (62a and b, 72a and b or 82a and b) assembled in series and at least one restraining and connecting armouring (63, 73 or 83) in which the two securing and restraining elements (64 and 66, 74 and 76 or 84 and 86) of each armouring (63, 73 or 83) act respectively with all or part of one of the coils of one of the helicoidal springs (62a and b, 72a and b or 8a and b) and with the spring body (69, 79 or 89) **characterised by** the fact that
each armouring (63, 73 or 83) consists of a band in rubbery material which has at its two loose ends, one of the securing or restraining elements (64, 74 or 84) fixed between the two helicoidal springs (62a and b, 72a and b or 82a and b); and the other securing element (66, 76 or 86) joined to the spring body (69, 79 or 89).

8. Suspension (61, 71 or 81), according to claim 7, **characterized by** the fact that
the securing part (64, 74 or 84), fixed between the two helicoidal springs (62a and b, 72a and b or 82a and b), is joined to a bearing cup (67, 77 or 87) which forms the interface between the two springs (62a and b, 72a and b or 82a and b).

9. Suspension (61 or 71) according to claim 7, which consists of at least two flexible restraining and connecting armourings (63 or 73), **characterized by** the fact that
the securing or restraining elements (64 or 74), fixed between the two helicoidal springs (62a and b or 72a and b), are joined by a floating cup (67 or 77) which separates the two springs (62a and b or 72a and b).

10. Suspension (1, 11, 21, 31, 41, 51, 61, 71 or 81), according to any of claims 1 to 9, **characterized by** the fact that
the flexible restraining and connecting armouring (3, 13, 23, 33, 43, 53, 63, 73 or 83) is made of a rubbery material enclosing wire (57) which makes the armouring deformable in compression and indeformable in relaxation.

11. Suspension (1, 11, 21, 31, 41, 51, 61, 71 or 81), according to any of claims 1 to 10, **characterized by** the fact that
each flexible restraining and connecting armouring (3, 13, 23, 33, 43, 53, 63, 73 or 83) is equipped with a jack (40) making it possible to regulate the tension.

12. Vehicle wheel suspension (91) using at least one spring in rubbery material (92), and at least one restraining and connecting armouring, which, when used, tensions a part of spring (92) while maintaining it compressed to obtain two curves of different stiffness whose point of inflection is located in the vicinity of the use position; relative to this position, during compression, all the spring in rubbery material (92) is compressed whereas at the time of relaxation only the part of the aforesaid spring (92) that is not compressed is relaxed, the suspension (91) thus being asymmetrical with a stiffness in relaxation which is higher than the stiffness in compression, **characterized by** the fact that
each restraining and connecting armouring is made up of two securing elements, one (94) acting with part of the spring in rubbery material (92), the other (95) acting with another part of the aforesaid spring (92), and of at least one longitudinal element (96) that is deformable in compression and indeformable in relaxation, joining the two securing elements, the restraining and connecting armouring enclosing and compressing the spring in rubbery material (92) for all or part of the length at least.

13. Suspension according to claim 12 **characterized by** the fact that
the securing elements (94 and 95) consist of an upper bearing cup (94) and lower bearing cup (95), connected one to the other by longitudinal elements (96) or wires.
